(19)

Europäisches
Patentamt
European
Patent Office
Office européen
des brevets

(11) **EP 3 200 141 A1**

(12) **EUROPEAN PATENT APPLICATION**

(43) Date of publication:
**02.08.2017 Bulletin 2017/31**

(51) Int Cl.:
**G06Q 30/02** (2012.01)

(21) Application number: **17152226.1**

(22) Date of filing: **19.01.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.01.2016 EP 16305077**

(71) Applicant: **Thomson Licensing
92130 Issy-les-Moulineaux (FR)**

(72) Inventors:
• **NEUMANN, Christoph
35576 Cesson-Sévigné Cedex (FR)**
• **VIGOUROUX, Jean-Ronan
35576 Cesson-Sévigné Cedex (FR)**
• **FILOCHE, Thierry
35576 Cesson-Sévigné Cedex (FR)**

(74) Representative: **Huchet, Anne
TECHNICOLOR
1-5, rue Jeanne d'Arc
92130 Issy-les-Moulineaux (FR)**

(54) **METHOD FOR MANAGING DEVICE REPLACEMENTS**

(57)     A method for managing device replacements is disclosed. The method proposes to data mine a dataset of device transitions, wherein a device transition is an entry representing a user replacing a first device by a second device at a given point in time. This dataset is exploited so as to first predict which device, or set of devices is closed to be obsolete and needs to be replaced and then, to determine a candidate new device that is the most suited to replace the obsolete device.

Figure 1

EP 3 200 141 A1

**Description**

1. TECHNICAL FIELD

The technical field of the disclosed method, device and system is related to data mining and knowledge discovery.

2. BACKGROUND ART

Internet service providers generally look for added value services to be delivered to their customers in order to differentiate from their competitors. They deliver internet access to customers by providing and operating an access point such as an Internet gateway device in the customer's home. The Internet gateway device, in addition to provide Internet access in the home, also generally provides basic home networking features such as Ethernet switching and / or WiFi access. A customer can therefore connect to the Internet at home from a variety of connected devices, such as personal computers, tablets, smartphones, set-top-boxes, smart TVs, etc...

Internet service providers have a limited knowledge of their customers, and generally rely on customer services, agencies or dedicated commercial surveys to learn about their customer habits and needs so as to propose or even design new services. It would be desirable for Internet service providers to extract knowledge from their network data so as to better understand their customer habits and needs. It would be desirable for Internet service providers to have a more direct way to gather knowledge on how a customer uses his connected devices in the home network and for example when the customer plans to replace a connected device. As of today, customers replace connected devices as they get broken or obsolete, and Internet service providers have a very little knowledge and understanding of the phenomena. Some new methods are needed so as to improve the set of connected devices, avoiding device obsolescence and increasing customer satisfaction. One possible approach is to detect in advance when connected devices are going to be replaced by a customer so as to suggest some new connected devices in line with the customer expectations.

From another perspective, in the domain of Android enabled smartphones, operators generally provide an adaptation of the Android layer for supporting their own services. Supporting a new model of smartphone generates some development cost and delays for the operator. Some new methods are needed for predicting device replacements that are likely to happen so as to better anticipate new device support and deliver services over a new device model.

3. SUMMARY

A salient idea is to data mine a dataset of device transitions, wherein a device transition is an entry representing a user replacing a first device by a second device at a given point in time. This dataset is exploited so as to first predict which device (or set of devices) is closed to be obsolete and needs to be replaced and then, to determine a candidate new device that is the most suited to replace the obsolete device.

To that end a method for managing a replacement of a current device by a new device is disclosed. The method comprises accessing a database comprising a plurality of users, a plurality of devices and a plurality of device transitions wherein a device transition represents a user transitioning from a first device to a second device at a given time. The method further comprises determining at least one user using the current device by:

- ranking users according to the time the users transitioned to the current device;
- selecting the at least one user using the current device in case the rank of the at least one user is smaller than a fraction of the number of users that transitioned from the current device.

The method further comprises obtaining the new device from the current device and the plurality of device transitions. The method further comprises generating an information item comprising the determined at least one user, the current device and the obtained new device.

According to a preferred embodiment, the fraction is a constant number equal to 0.8.

According to a particularly advantageous variant, the fraction is dynamically adjusted so as to keep the number selected users constant per time unit.

According to another variant, obtaining of the new device further comprises obtaining a plurality of transition matrices, wherein a transition matrix comprises the device transitions observed between devices over a time window.

According to another variant, the time windows of the plurality of transition matrices are contiguous time windows.

According to another variant, obtaining the new device further comprises obtaining an extrapolated transition matrix from a current transition matrix raised to the power of at least one, wherein the current transition matrix comprises the most recently observed device transitions.

According to another variant, the new device is obtained from the product of the plurality of transition matrices, the extrapolated transition matrix, and a device vector, wherein the device vector is a null vector except for the row corresponding to the current device, being set to one.

According to another variant, an early adopter of a device is a user belonging to the first twenty percent of users having transitioned to the device, and wherein in case the at least one user using the current device is an early adopter of the current device, the method further comprises:

- determining at least one early adopter using the current device by:

  o ranking early adopters according to the time the early adopters transitioned to the current device;
  o selecting the at least one early adopter using the current device in case the rank of the at least one early adopter is smaller than a fraction of the number of early adopters that transitioned from the current device;

- obtaining the new device from the current device and a plurality of early adopter device transitions, wherein an early adopter device transition is a device transition involving an early adopter of the second device;
- generating an information item comprising the determined at least one early adopter, the current device and the obtained new device.

In a second aspect a device for managing a replacement of a current device by a new device is also disclosed. The device comprises a processor configured to:

- access a database comprising a plurality of users, a plurality of devices and a plurality of device transitions wherein a device transition represents a user transitioning from a first device to a second device at a given time;
- determine at least one user using the current device by:

  ∘ ranking users according to the time the users transitioned to the current device;
  ∘ selecting the at least one user using the current device in case the rank of the at least one user is smaller than a fraction of the number of users that transitioned from the current device;

- obtain the new device from the current device and the plurality of device transitions;
- generate an information item comprising the determined at least one user, the current device and the obtained new device.

According to a variant, the processor configured to obtain the new device is further configured to obtain a plurality of transition matrices, wherein a transition matrix comprises the device transitions observed between devices over a time window.

According to another variant, the processor configured to obtain the new device is further configured to obtain an extrapolated transition matrix from a current transition matrix raised to the power of at least one, wherein the current transition matrix comprises the most recently observed device transitions.

In a third aspect a computer program for managing a replacement of a current device by a new device is also disclosed. The computer program comprises program code instructions executable by a processor for:

- accessing a database comprising a plurality of users, a plurality of devices and a plurality of device transitions wherein a device transition represents a user transitioning from a first device to a second device at a given time;
- determining at least one user using the current device by:

  ∘ ranking users according to the time the users transitioned to the current device;
  ∘ selecting the at least one user using the current device in case the rank of the at least one user is smaller than a fraction of the number of users that transitioned from the current device;

- obtaining the new device from the current device and the plurality of device transitions;
- generating an information item comprising the determined at least one user, the current device and the obtained new device.

In a fourth aspect a computer program product for managing a replacement of a current device by a new device is also disclosed. The computer program product is stored on a non-transitory computer readable medium, and comprises program code instructions executable by a processor for:

- accessing a database comprising a plurality of users, a plurality of devices and a plurality of device transitions wherein a device transition represents a user transitioning from a first device to a second device at a given time;
- determining at least one user using the current device by:

  ○ ranking users according to the time the users transitioned to the current device;
  ○ selecting the at least one user using the current device in case the rank of the at least one user is smaller than a fraction of the number of users that transitioned from the current device;

- obtaining the new device from the current device and the plurality of device transitions;
- generating an information item comprising the determined at least one user, the current device and the obtained new device.

While not explicitly described, the present embodiments may be employed in any combination or sub-combination. For example, the present principles are not limited to the described variants, and any arrangement of variants and embodiments can be used. Moreover the present principles are not limited to the described dataset examples. The present principles are not further limited to the described device models and are applicable to any type of devices that are acquired and replaced within a population of users. The present principles are not further limited to the described extrapolation techniques for obtaining an extrapolated matrix.

Besides, any characteristic, variant or embodiment described for the method is compatible with a device intended to process the disclosed method and with a computer-readable storage medium storing program instructions.

## 4. BRIEF DESCRIPTION OF THE DRAWINGS

In the drawings, an embodiment of the present disclosure is illustrated. It shows:

- **Figure 1** illustrates the method for managing device replacements according to a particular embodiment;
- **Figure 2** illustrates a set of transition matrices according to a particular embodiment;
- **Figure 3** illustrates a processing device for managing device replacements according to a preferred embodiment;
- **Figure 4** represents an exemplary architecture of the processing device of figure 1 according to a particular embodiment.

## 5. DESCRIPTION OF EMBODIMENTS

The disclosed principles address the technical problem of reducing the obsolescence of a set of devices by datamining a dataset of device transitions. A salient idea is to decompose the problem in two related sub-problems: (i) determining which device (or set of devices) is closed to be obsolete and needs to be replaced and (ii) determining a candidate new device that is the most suited to replace the obsolete device.

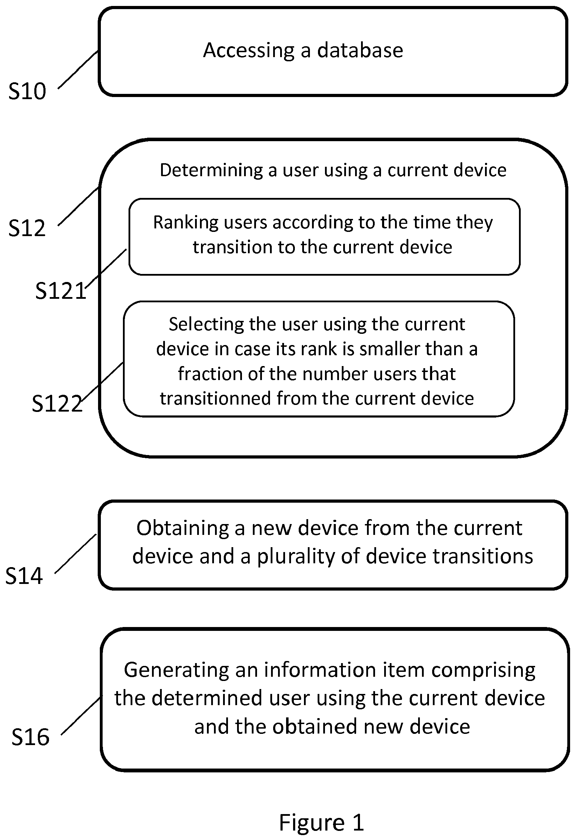

**Figure 1** illustrates the method for managing a device replacement of a current device by a new device from a dataset of device transitions. The dataset is for example loaded in a database. The method for managing a device replacement comprises determining a user using a current device (sub problem (i)), and obtaining a new device from the current device and a plurality of device transitions (sub problem (ii)).

The method comprises a step S10 of accessing a database comprising a plurality of users, a plurality of devices and a plurality of device transitions wherein a device transition represents a user transitioning from a first device to a second device at a given time. A device transition is an object of the dataset representing the fact that a user transitioned from a first device corresponding to a first device model to a second device corresponding to a second device model at a given time. In other words a device transition captures the fact that a particular user decided to replace an old device (also called the current device) by a new device at a particular point in time. For example a device transition comprises a set of parameters such a user identifier, a time information, an old device model information, and a new device model information. In case of a new device acquisition without replacement, the old device model information parameter value is set for instance to zero. Similarly in case of device obsolescence, as for instance a device being dropped and not replaced, the new device model information parameter value is also set for instance to zero. Several variants of datasets are applicable to the disclosed principles. In a first variant the dataset is acquired by a device reseller such as for example a consumer electronics device reseller (as for example Amazon or Wallmart). Devices are for example TV sets, tablets, smartphones, and a device model is a particular device model (iPhone5, or Samsung Galaxy S3, Samsung Galaxy S4 ...) or a group of device models (Sony LCD TVs of a certain screen size, Sony LED TVs or another size ...). Any kind of grouping of device models (by supplier, by size, by technology ...) is compatible with the disclosed principles. A device transition captures the fact that a user replaced for instance an iPhone5 by a Samsung Galaxy S4 at a particular date. The device reseller for example builds the dataset as he sales items to customers (asking them for instance whether this new acquisition replaces an old device and of which model). Any kind of device reseller is compatible with the disclosed principles.

In a second variant a mobile operator acquires the dataset by observing the devices associated to the SIM cards of its customers. For example the mobile operator logs events where a SIM card moves from a first device to a second device and creates an object in the dataset accordingly.

In another variant, a service provider observing device connections and behaviors in home networks, acquires a device transition dataset by monitoring the operating status of a plurality of gateways as described in European Patent Application EP 15306695.6.

EP 15306695.6 describes a method for detecting device transitions within home networks by monitoring the home gateway operating status. More precisely, EP 15306695.6 describes a method for detecting a replacement of a first device by a second device in a network from an operating status of a gateway sampled by the gateway over at least one time window, the replacement detection being responsive to:

- a connectivity to the gateway of the first device over a previous and a current time windows;
- a connectivity to the gateway of the second device over the previous and the current time windows;
- a matching of a first fingerprint at least associated with the first device over the previous time window, to a second fingerprint at least

associated with the second device over the current time window; wherein the first device and second device connectivity, the first and second fingerprints are obtained from the gateway operating status. EP 15306695.6 is incorporated by reference in the present description, with the following considerations:

- A device replacement of a first device by a second device as disclosed by EP 15306695.6 corresponds to a device transition of user from a first device to a second device at a given time as disclosed by the current description.
- Time windows disclosed in EP 15306695.6 comprise a current and a previous time windows and are different time windows from those disclosed by the current description. The current and previous time windows disclosed in EP 15306695.6 are defined per gateway and contribute to determine the connectivity of devices to the gateway.

The method described in EP 15306695.6 is applied to acquire the device transition dataset according to this embodiment: more precisely when a device replacement of a first device by a second device is detected according to EP 15306695.6, a device transition from that first device to that second device is added in the dataset, wherein the user corresponds to the Internet subscriber of the corresponding gateway, and the device transition time corresponds to the time the second device has been observed connected to the gateway for the first time. More precisely, EP 15306695.6 describes several variants for determining the connectivity of a device to a gateway over time, based on the monitoring of a connection status parameter. Any connection status monitoring variant is applicable to determine the time when a device has been observed connected to the gateway for the first time.

Any kind of data set capturing a set of device transitions, wherein users transition over time from a first device model to a second device model among a plurality of device models, is applicable to the disclosed principles.

In the step S10, the database comprising the plurality of users, the plurality of devices and the plurality of device transitions is queried, for example for a particular device model (for instance an iPhone 4), also called here below a current device. From that query a list of user identifiers is retrieved, identifying users who acquired an exemplar of the current device at some point in time. In the step S12, at least one user using the current device is determined by ranking in the sub-step S121 the users of that list according to the time they acquired an exemplar of (transitioned to) the current device. The at least one user using the current device is a user among those having acquired an exemplar of a current device in the past, and not having replaced it yet by an exemplar of another device model. The at least one user using a current device is further selected in the sub-step S122 in case the rank of the at least one user is smaller than a fraction f of the number of users that acquired an exemplar of the current device but already replaced it by an exemplar or another device model (transitioned from the current device).

More formally, for a device model $m_i$ (e.g. Iphone 5, Samsung Galaxy S4...) users are ranked according to the date they acquired an exemplar of that device model :

$$\text{For } m_i \ : u_1(m_i) \leq u_2(m_i) \leq \ldots.. \leq u_k(m_i) \leq\ldots.. \leq u_n(m_i)$$

In the above formula, the user $u_1(m_i)$ having rank 1, purchased an exemplar of the device model $m_i$ before user $u_2(m_i)$ that has rank 2 etc... Let $r^{mi}$ be the number of device replacements observed for device model $m_i$. The at least one user $u_k(m_i)$ is determined for the values of k where $k/ r^{mi} < f$, (f being a fraction number comprised for example between 0.8 and 1). Ranking users according to the time they acquired (transitioned to) the current device captures in some sort an obsolescence degree of the current device for users who still use it. Evaluating user ranks against a fraction of the number of replacements that occurred for that current device provides a strong indicator on who are the next users, still using the current device, who are the most likely to replace it. Comparing the rank to a fraction f of the number device replacements observed for the current device is advantageous compared to strictly comparing the rank to the exact number of device replacements as it allows to fine-tune the selection mechanism. For example the fraction is dynamically adjusted so as to limit the number of selected users per day or per time unit. Such an adjustment is useful in case a processing is applied after the user selection, wherein the processing as a limited capacity. An example of processing applied to a selected set of users is sending mails to those users for suggesting a device replacement. Another example is computationally generating an information item comprising a device replacement suggestion as described later, and wherein the computational processing applies on a server with limited computing resources. In a variant the fraction is determined from a learning technique such as a marketing AB testing technique applied to the user reaction observed after a suggestion of device replacement. If a device replacement is observed after a suggestion, the result of the test is considered as positive. In case for example replacement suggestions are ignored or followed by a user un-subscription to a service, the test is considered as negative.

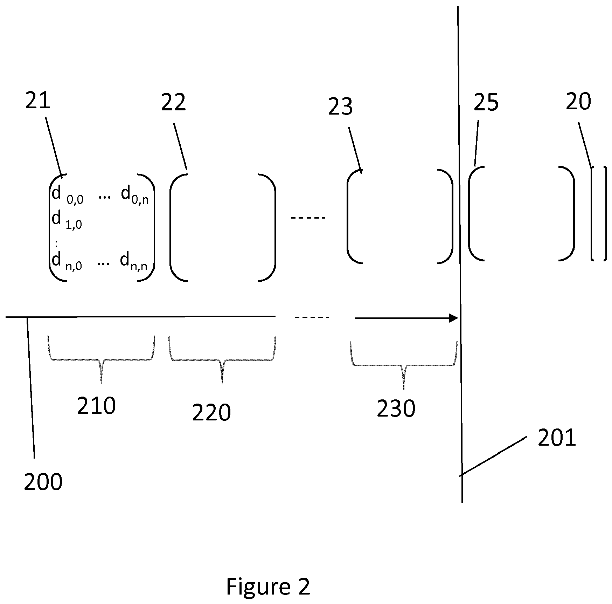

In the step S14, a new device is obtained from the current device and a plurality of device transitions. A plurality of transition matrices is further obtained as later described in figure 2. The new device corresponds to a device model that has a high probability to be chosen by the at least one selected user for replacing the current device he is using. Obtaining the new device is further detailed through the description of figure 2.

In the step S16, an information item is generated wherein the information item comprises the selected at least one user using the current device and the obtained new device. This information item is generated towards the user using the current device so as to suggest him to replace its exemplar of the current device by an exemplar of the new device. Predicting which users are very likely to replace an obsolete device and directing towards them a replacement suggestion for a new device they are very likely to adopt is advantageous as it will accelerate the device renewal process and reduce the obsolescence of the set of devices. In a first variant the information item is generated for example on a server owned by a service provider operating the set of devices. The information item feeds an application in charge of generating mails to customers for suggesting replacing their current device. In another variant, the information item feeds an application in charge of displaying a recommendation towards the user, for example as he browses a service portal of the operator. In yet another variant, the recommendation is displayed on the current device exemplar owned by the user as he starts his device. Any variant for communicating to the at least one selected user, a suggestion for replacing the current device by the new device is compatible with the disclosed principles.

**Figure 2** illustrates a set of transition matrices according to a particular embodiment. A transition matrix 21, 22, 23 comprises device transitions observed between devices over a time window 210, 220, 230. More precisely, considering the dataset comprises a number of $n$ distinct device models, a transition matrix 21, 22, 23 is a $(n,n)$ matrix wherein the element $d_{i,j}$ (row $i$, column $j$) represents the number users having transitioned from device model $i$ to device model $j$ during the corresponding time window 210, 220, 230. In other words, the element $d_{i,j}$ of the transition matrix 21 is the number of users who acquired an exemplar of the device model $j$ in replacement of an exemplar of the device model $i$ during the time window / period 210. The element $d_{i,i}$ (belonging to the diagonal of the matrix) is the number of users who kept the device model $i$ during the time window. Advantageously the first row / column element represent a null device, and the element $d_{0,j}$ represents a number of users who acquired an exemplar of the device model $j$ without replacing any old device. Advantageously and similarly the last row / column element also represents a null device: the element $d_{j,n+1}$ for example represents a number of users who dropped (stopped using) an exemplar of the device model $j$ without replacing it by a new device. A transition matrix 21, 22, 23 models as a Markov Chain all the device transitions observed during the corresponding period / time window 210, 220, 230. Advantageously, in a transition matrix 21, 22, 23 the numbers of device transitions ($d_{i,j}$ from device model $i$ to device model $j$) are weighted by the number of device transitions over the corresponding time window (210, 220, 230). In a variant the numbers of device transitions ($d_{i,j}$ from device model i to device model $j$) in a transition matrix 21, 22, 23 are weighted, by the number of device transitions of the same line of the matrix (i.e. all the transitions from the device model $i$), over the corresponding time window (210, 220, 230). For example, the numbers of device transitions are divided by the total number of device transitions of the same line of the matrix, this corresponds to a normalization of the data and improves the accuracy of further processing.

Time windows 210, 220, 230 are chronologically ordered on a time scale 200, comprising a present time 201 where the prediction is computed. In a first variant the time widows 210,220,230 are contiguous time windows. This allows an efficient modelling of the Markov Chain over time. In a second variant, the time windows 210, 220, 230 are slightly overlapping from a portion. This allows to put more emphasis on some particular portions of the time (the overlapping period), but implies more computing resources for a same prediction. In another variant the time windows 210, 220, 230 are slightly discontinuous, requiring less computing resources, but with a loss in the prediction accuracy.

A new device is obtained in the step S14 by iterating over the history of device transitions corresponding to a set of time windows 210, 220, 230 in any of the above variant. An extrapolated transition matrix 25 is further obtained from a current transition matrix 23 raised to the power of at least one, wherein the current transition matrix 23 comprises the most recently observed device transitions, i.e. the device transitions observed over the most recent time window 230. The new device is obtained from the product of the plurality of transition matrices 21, 22, 23, the extrapolated transition matrix 25, and a device vector 20, wherein the device vector 20 is a null vector except for the row corresponding to the current device, being set to one. More formally, let $d$ be the current device for which the replacement prediction is computed. Let $t_0(d)$ be the time when the exemplar of the current device $d$ has been purchased by the selected user. Let $q$ be the personalized initialization vector of the current device: only the row corresponding to the current device $d$ is set to one, other values remain at zero. A prediction vector p is computed as follow:

$$p = q^T \prod_{n=s,t0(d)\in Ws}^{l} (Mn)g(Ml)$$

Where $M_n$ is the transition matrix corresponding to the time window $W_n$. The prediction vector $p$ is obtained from the product of the transition matrices 21, 22, 23 over the time windows 210, 220, 230, starting from the time window comprising the acquisition time of the exemplar of the current device by the selected user, up to the current time window 23. In case more than one user is selected the same process is applied for all the selected users. Intuitively the prediction computation replays all device transitions probabilities since the device acquisition. The current period is extrapolated using a function $g()$ to predict the future replacements, being detailed below. The computed prediction vector p comprises a prediction value for each device model. A set of new device candidates is obtained from the maximum values observed in the vector p. The last value of p corresponding to a null device (dropped device with no replacement), is likely to spur and is consequently ignored while obtaining the new device. A new device is obtained from the device candidates.

As mentioned above, the function g() extrapolates the last transition matrix so as to predict future device replacements. In a first variant $g(Ml)$ is simply equal to $Ml,$ so that the extrapolated transition matrix is the current transition matrix. In a second variant the extrapolated transition matrix is the current transition matrix raised to the power of two. Intuitively, this corresponds to applying two times the device replacements observed in the last time window, resulting in predicting one time window ahead. More generally, $g()$ calculates powers of the current transition matrix 23. But the resulting matrix might not converge. An alternative is to calculate the mean probability transition matrix as follow:

$$g(Pl) = \frac{1}{M} \sum_{n=1}^{M} Pl^n$$

In another variant $g()$ calculates the stationary state of the system convergence. The Markov Chain can be non-ergodic. More generally the Markov Chain may not converge to a unique stationary distribution, (i.e. $\lim_{n\to\infty} (Pl)^n$ may does not converge). In that case $g()$ is defined as the asymptotic averages over time of state probabilities:

$$g(Pl) = \lim_{M\to\infty} \frac{1}{M} \sum_{n=1}^{M} Pl^n$$

In an advantageous variant, early adopters are processed differently. Considering a current device wherein an exemplar has been acquired by a group of users over time, the early adopters are the first users having acquired an exemplar of the current device for example the first twenty percent, or the first sixteen percent of users. Said differently, early adopters are defined with respect to a particular device model and are the first users having acquired an exemplar of that device model. Advantageously, early adopters are determined on a set of consecutive time windows. In the variant, the early adopters of the current device are ranked separately from the rest of the users of the current device, and the same method is applied among them. At least one early adopter is determined by ranking early adopters according to the time they transitioned to the current device, and by selecting at least one early adopter using the current device in case the rank of the at least one early adopter is smaller than a fraction of the number of early adopters that transitioned from the current device. For obtaining the new device for that at least one early adopter, the same technique as described above is applied, restricted to the device transitions of the early adopters, as they transition to devices. In other words, instead of obtaining a set of general transitions matrices 21, 22, 23 comprising the transitions between devices observed for users over a time window 210, 220, 230, a set of early adopter device transition matrices are obtained, wherein an early adopter device transition matrix comprises device transitions over a time window involving only early adopters acquiring a new device. Managing device replacements for early adopters separately from the general users is advantageous as it allows to capture more accurately the specificities of their behavior, and consequently generate more accurate predictions for early adopters.

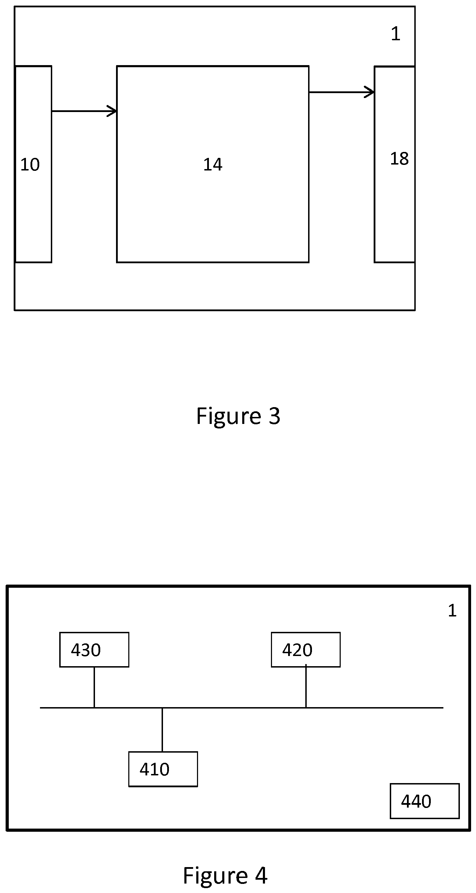

**Figure 3** depicts a processing device 1 for managing a device replacement of a current device by a new device.

According to a specific and non-limiting embodiment, the processing device 1 comprises an input 10 configured to receive data from a database comprising a plurality of users, a plurality of devices and a plurality of device transitions wherein a device transition represents a user transitioning from a first device to a second device at a given time. The data is received from a network interface. According to different embodiments of the disclosed principles, the network interface belongs to a set comprising:

- A local area network interface such as for example Ethernet, WiFi, MoCA or a power line interface, wherein the local network interface provides a connection to a broadband delivery network via a home gateway;
- A broadband network interface, comprising a wide area network interface such as xDSL, GPON, WiMAX.

More generally any network interface allowing to access the database, is compatible with this principle.

The input 10 is linked to a processing module 14 configured to manage a device replacement of a current device by a new device. The processing module 14 is configured to access the database to retrieve a plurality of users and a plurality of device transitions. The processing module 14 is further configured to determine at least one user using the current device by ranking users according to the time they transitioned to the current device, and by selecting the at least one user using the current device in case the rank of the at least one user is smaller than a fraction of the number of users that transitioned from the current device. The processing module 14 is further configured to obtain the new device from the current device and the plurality of device transitions. The processing module 14 is further configured to generate an information item comprising the determined at least one user, the current device and the obtained new device. The generated information item is sent to an output 18 such as for example a display means or a network interface. According to a particular embodiment, the network interface belongs to the set described for the input 10. According to a particular embodiment, the display means is external to the device and the output 18 sends the information item to an external display means. According to different embodiments of the principle, the display means, internal or external, belongs to a set comprising:

- a personal computer screen;
- a TV screen;
- a tablet;
- a smartphone screen.

According to a particular embodiment the generated information item feeds an application running in a back-end server of the operator / reseller, wherein the application is in charge of monitoring the set of devices currently used by the customers and of reporting predictions of device replacements to the operator / reseller. According to another particular embodiment, the generated information item is displayed as a suggestion towards a user to replace its current device exemplar by an exemplar of the new device, wherein the suggestion is displayed on the screen of the exemplar of the current device. According to yet another embodiment the generated information item is displayed as a similar suggestion on another display device belonging to the user of the current device. More generally any display means allowing to display an information item related to the prediction of a device replacement, and any network interface allowing to a prediction for a device replacement, are compatible with this principle.

**Figure 4** represents an exemplary architecture of the processing device 1 according to a specific and non-limiting embodiment, where the processing device 1 is configured to manage a device replacement of a current device by a new device. The processing device 1 comprises one or more processor(s) 410, which is(are), for example, a CPU, a GPU and/or a DSP (English acronym of Digital Signal Processor), along with internal memory 420 (e.g. RAM, ROM, EPROM). The processing device 1 comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 1.

According to an exemplary and non-limiting embodiment, the processing device 1 further comprises a computer program stored in the memory 420. The computer program comprises instructions which, when executed by the processing device 1, in particular by the processor 410, make the processing device 1 carry out the processing method described with reference to figure 1. According to a variant, the computer program is stored externally to the processing device 1 on a non-transitory digital data support, e.g. on an external storage medium such as a SD Card, HDD, CD-ROM, DVD, a read-only and/or DVD drive and/or a DVD Read/Write drive, all known in the art. The processing device 1 thus comprises an interface to read the computer program. Further, the processing device 1 could access one or more Universal Serial Bus (USB)-type storage devices (e.g., "memory sticks.") through corresponding USB ports (not shown).

According to exemplary and non-limiting embodiments, the processing device 1 is a device, which belongs to a set comprising:

- an Internet gateway device;
- a set top box device;
- a digital media player device;
- a TV device;
- a mobile device ;
- a communication device ;
- a game device ;
- a tablet (or tablet computer) ;
- a smartphone;
- a laptop;
- a web server;
- a cloud computing instance.

**Claims**

1. A method for managing a replacement of a current device by a new device, said method being performed by a processing device, said method comprising:

   - accessing (S10) a database comprising a plurality of users, a plurality of devices and a plurality of device transitions wherein a device transition represents a user transitioning from a first device to a second device at a given time;
   - determining (S12) a user using said current device by:

     o computing a number of users that transitioned from said current device;
     ∘ computing a rank for each user that transitioned to said current device according to the time said users transitioned to said current device;
     ∘ selecting (S122) the user using said current device in case the rank of said user is smaller than a fraction of the number of users that transitioned from said current device;

   - obtaining (S14) said new device for replacing said current device based on said plurality of device transitions and said current device;
   - generating (S16) an information item comprising said determined user, said current device and said obtained new device.

2. The method according to claim 1, wherein said fraction is a constant number equal to 0.8.

3. The method according to claim 1, wherein said fraction is dynamically adjusted so as to keep a number of selected users constant per time unit.

4. The method according to any of claims 1 to 3, wherein said obtaining (S14) of said new device further comprises obtaining a plurality of transition matrices (21, 22, 23), wherein a transition matrix comprises device transitions observed between devices over a time window (210, 220, 230).

5. The method according to claim 4, wherein time windows (210, 220, 230) of the plurality of transition matrices (21, 22, 23) are contiguous time windows.

6. The method according to any of claims 4 to 5, wherein said obtaining (S14) said new device further comprises obtaining an extrapolated transition matrix (25) from a current transition matrix (23) raised to the power of at least one, wherein said current transition matrix (23) comprises the most recently observed device transitions.

7. The method according to claim 6, wherein said new device is obtained from the product of said plurality of transition matrices (21, 22, 23), said extrapolated transition matrix (25), and a device vector (20), wherein said device vector (20) is a null vector except for the row corresponding to said current device, being set to one.

8. The method according to any of claims 1 to 7, wherein an early adopter of a device belongs to the first twenty percent of users having transitioned to said device, and wherein in case said user using said current device is an early adopter of said current device, said method further comprising:

   - determining (S12) an early adopter using said current device by:

     ◦ computing a number of early adopters that transitioned from said current device;
     ◦ computing a rank for each early adopter that transitioned to said current device according to the time said early adopters transitioned to said current device;
     ◦ selecting (S122) the early adopter using said current device in case the rank of said early adopter is smaller than a fraction of the number of early adopters that transitioned from said current device;

   - obtaining (S14) said new device from said current device and a plurality of early adopter device transitions, wherein an early adopter device transition is a device transition involving an early adopter of said second device;
   - generating (S16) an information item comprising said determined early adopter, said current device and said obtained new device.

9. A device (1) for managing a replacement of a current device by a new device, said device (1) comprising a processor (410) configured to:

   - access a database comprising a plurality of users, a plurality of devices and a plurality of device transitions wherein a device transition represents a user transitioning from a first device to a second device at a given time;
   - determine a user using said current device by:

     ◦ computing a number of users that transitioned from said current device;
     ◦ computing a rank for each user that transitioned to said current device according to the time said users transitioned to said current device;
     ◦ selecting the user using said current device in case the rank of the user is smaller than a fraction of the number of users that transitioned from said current device;

   - obtain said new device for replacing said current device based on said plurality of device transitions and said current device;
   - generate an information item comprising said determined user, said current device and said obtained new device.

10. The device (1) according to claim 9, wherein said fraction is a constant number equal to 0.8

11. The device (1) according to claim 9, wherein said fraction is dynamically adjusted so as to keep a number of selected users constant per time unit.

12. The device (1) according to any of claims 9 to 11, wherein said processor (410) configured to obtain said new device, is further configured to obtain a plurality of transition matrices (21, 22, 23), wherein a transition matrix comprises device transitions observed between devices over a time window (210, 220, 230).

13. The device (1) according to claim 12, wherein time windows (210, 220, 230) of the plurality of transition matrices (21, 22, 23) are contiguous time windows.

14. The device (1) according to any of claims 12 to 13, wherein said processor (410) configured to obtain said new device, is further configured to obtain an extrapolated transition matrix (25) from a current transition matrix (23) raised to the power of at least one, wherein said current transition matrix (23) comprises the most recently observed device transitions.

15. A computer program product comprising instructions of program code for execution by at least one processor for managing a replacement of a current device by a new device, comprising instructions of program code for:

- accessing a database comprising a plurality of users, a plurality of devices and a plurality of device transitions wherein a device transition represents a user transitioning from a first device to a second device at a given time;
- determining a user using said current device by:

  ○ computing a number of users that transitioned from said current device;
  ○ computing a rank for each user that transitioned to said current device according to the time said users transitioned to said current device;
  ○ selecting said user using said current device in case the rank of said user is smaller than a fraction of the number of users that transitioned from said current device;

- obtaining said new device for replacing said current device based on said plurality of device transitions and said current device;
- generating an information item comprising said determined user, said current device and said obtained new device.

Accessing a database

S10

Determining a user using a current device

S12

Ranking users according to the time they transition to the current device

S121

Selecting the user using the current device in case its rank is smaller than a fraction of the number users that transitionned from the current device

S122

Obtaining a new device from the current device and a plurality of device transitions

S14

Generating an information item comprising the determined user using the current device and the obtained new device

S16

Figure 1

$$\begin{pmatrix} d_{0,0} & \cdots & d_{0,n} \\ d_{1,0} & & \\ \vdots & & \\ d_{n,0} & \cdots & d_{n,n} \end{pmatrix}$$

21  22  23  25  20

210  220  230

200  201

Figure 2

Figure 3

Figure 4

Europäisches
Patentamt

European
Patent Office

Office européen
des brevets

# EUROPEAN SEARCH REPORT

Application Number

EP 17 15 2226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 779 037 A2 (RICOH CO LTD [JP]) 17 September 2014 (2014-09-17) <br> * figures 1-4 * <br> * paragraphs [0001], [0006], [0007], [0012], [0013] * <br> * paragraphs [0022] - [0040] * <br> * paragraphs [0044], [0045], [0059], [0060] * <br> ----- | 1-15 | INV. G06Q30/02 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 6 February 2017 | Meijs, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 200 141 A1**

## ANNEX TO THE EUROPEAN SEARCH REPORT
## ON EUROPEAN PATENT APPLICATION NO.

EP 17 15 2226

06-02-2017

| Patent document cited in search report | | Publication date | Patent family member(s) | | Publication date |
|---|---|---|---|---|---|
| EP  2779037 | A2 | 17-09-2014 | EP     2779037 A2 | | 17-09-2014 |
| | | | JP  2014199639 A | | 23-10-2014 |
| | | | US  2014279264 A1 | | 18-09-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 15306695 A